# EUROPÄISCHE PATENTSCHRIFT

(11) **EP 2 646 683 B1**
(45) Veröffentlichungstag und Bekanntmachung des Hinweises auf die Patenterteilung: **10.09.2014**
(21) Anmeldenummer: 11796944.4
(22) Anmeldetag: 30.11.2011
(51) Int. Cl.: F03D 1/06, B29D 99/00, C08G 18/32, C08G 18/40, C08G 18/42, C08G 18/48, C08G 18/50, C08G 18/66, C08K 7/14, C08K 7/22, C08K 7/28

(54) **KERNSCHÄUME AUS POLYURETHAN FÜR DIE HERSTELLUNG VON FLÜGELN, INSBESONDERE FÜR WINDKRAFTANLAGEN**
POLYURETHANE FOAM CORE FOR PRODUCING BLADES, IN PARTICULAR FOR WIND POWER TURBINES
MOUSSE À NOYAU EN POLYURÉTHANE POUR LA FABRICATION DE PALES, NOTAMMENT POUR ÉOLIENNES

(30) Priorität: 01.12.2010 EP 10193263
(43) Veröffentlichungstag der Anmeldung: 09.10.2013
(73) Patentinhaber: BASF SE, 67056 Ludwigshafen (DE)
(72) Erfinder: PRISSOK, Frank, 49448 Lemförde (DE); BALBO BLOCK, Marco, 49074 Osnabrück (DE); QIAN, Zhenyu, Shanghai 200129 (CN); FREIDANK, Daniel, 49448 Lemförde (DE); SCHERZER, Dietrich, 67433 Neustadt (DE); MARTIN, Ingrid, 49448 Lemförde (DE)
(86) Internationale Anmeldenummer: PCT/EP2011/071400
(87) Internationale Veröffentlichungsnummer: WO 2012/072687

(56) Entgegenhaltungen:
- EP-A2- 2 236 537
- WO-A1-01/62842
- WO-A1-2008/083996
- WO-A1-2010/066635
- DE-A1- 3 435 458
- US-A- 5 770 635
- US-A1- 2007 015 842

## Beschreibung

Die vorliegende Erfindung betrifft einen verstärkten Polyurethanschaumstoff mit einer Dichte von größer 50 bis 300 g/L, einer dichteunabhängigen Druckfestigkeit von größer 7,5*10⁻⁴ MPa (L/g)^{1,6}, einem dichteunabhängigen Druck-Elastizitätsmodul von größer 1,7*10⁻² MPa (L/g)^{1,7}, einer dichteunabhängigen Zugfestigkeit von größer 6,4*10⁻⁴ MPa (L/g)^{1,6}, einem dichteunabhängigen Zug-Elastizitätsmodul von größer 2,4*10⁻² MPa (L/g)^{1,7}, einer dichteunabhängigen Biegefestigkeit von größer 1,25*10⁻³ MPa (L/g)^{1,6}, und einem dichteunabhängigen Biege-Elastizitätsmodul von größer 1,75*10⁻² MPa (L/g)^{1,7}, erhältlich durch Vermischen von (a) Polyisocyanaten mit (b) Verbindungen mit gegenüber Isocyanaten reaktiven Gruppen, (c) Treibmittel, enthaltend Wasser und gegebenenfalls (d) Katalysator und (e) weiteren Additiven, zu einer Reaktionsmischung und Aushärten der Reaktionsmischung, wobei die zu härtende Reaktionsmischung 1 bis 40 Gew.-% Mikrohohlkugeln enthält und/oder auf ein poröses Verstärkungsmittel (f), das in der Lage ist, im Polyurethanschaumstoff zweidimensionale oder dreidimensionale Netzwerke zu bilden, aufgetragen wird, die Verbindungen mit gegenüber Isocyanaten reaktiven Gruppen (b) Polyetherole (b1), Polyesterole (b2), Kettenverlängerer (b3) und gegebenenfalls Vernetzer (b4) und aromatische Polyetherdiole (b5), enthalten, und die Komponente (b) einen Anteil an Polyesterolen (b2), Kettenverlängerern (b3) und aromatischem Polyetherdiol (b5) von mindestens 50 Gew.-%, bezogen auf das Gesamtgewicht der Komponente (b), enthält. Weiter betrifft die Vorliegende Erfindung ein Verfahren zur Herstellung von solchen verstärkten Polyurethanschaumstoffen und deren Verwendung als verstärkende Schaumstoffe für lasttragende, steife Flächenelemente, im Innem von Flügeln oder Tragflächen sowie als Isolationsmaterial für Flüssigerdgastanks.

Verstärkte Hartschschaumstoffe auf Basis von Polyurethanen sind bekannt und beispielsweise in WO 2010/066635 oder WO 2008/083996 beschrieben. Diese Schaumstoffe werden beispielsweise eingesetzt als Isolationsmaterial für Flüssigerdgastanks, insbesondere auf Flüssigerdgastankern, auch als LNG-Tanker bezeichnet, eingesetzt. Die Anforderungen an die mechanischen Eigenschaften solche Isolationsmaterialien sind hoch, da diese neben der Isolationsfunktion auch tragende Funktion für den Flüssigerdgastank ausfüllen. Dabei sind vor allem hohe Druckfestigkeiten, ein hoher Druck-Elastizitätsmodul sowie eine hohe Scherfestigkeit erforderlich. Obwohl die bekannten Schaumstoffe bereits sehr gute Eigenschaften bieten, ist eine Verbesserung dieser Eigenschaften, insbesondere der Elastizität, erwünscht. So können Erschütterungen, wie beispielsweise bei starkem Seegang während des Transports in Flüssigerdgastankern, besser abgefedert werden.

Für harte Schaumstoffe mit sehr guten mechanischen Eigenschaften gibt es weitere Anwendungsgebiete. So werden diese Schaumstoffe beispielsweise in Flügeln und Tragflächen, beispielsweise für Sportflugzeuge, wie Segelflugzeuge, oder in Rotorflügeln, beispielsweise für Windkraftanlagen eingesetzt. Das zur Verstärkung in Flügeln und Tragflächen zur Zeit am häufigsten verwendete Material ist Balsaholz, Schaum auf Basis von vernetztem Polyvinylchlorid und Schaum auf Basis von Polyethylenterephthalat.

Nachteilig an diesen Materialien, die zur Verstärkung in Flügeln und Tragflächen eingesetzt werden, ist, dass Balsaholz als natürliche Ressource nur begrenzt vorkommt und teuer ist, das Herstellungsverfahren für Schaum auf Basis von vernetztem Polyvinylchlorid sehr aufwendig und durch den hohen Halogengehalt umweltbelastend ist und die mechanischen Eigenschaften von Schaum auf Basis von Polyethylenterephthalat verbesserungswürdig sind.

Weiter ist insbesondere im Windanlagenbau ein Trend zu immer größeren Anlagen mit längeren Flügeln zu erkennen. Zu deren Herstellung wird üblicherweise eine tragende Glasfaser/Reaktivharzschicht auf den verstärkenden Schaum aufgetragen. Als Reaktivharze werden dabei hauptsächlich Epoxydharze oder Polyesterharze verwendet. Diese Harze entwickeln beim Ausreagieren Reaktionswärme oder müssen erwärmt werden.

Durch die immer größer werdenden Flügel steigen die mechanischen Anforderungen an diese tragenden Glasfaser/Reaktivharzsysteme als Deckschicht. Um diesen mechanischen Anforderungen zu entsprechen, wird meist die Dicke der Deckschicht erhöht. Dies führt dazu, dass die bei der Härtung vorkommende Temperatur steigt.

Auch gibt es Bemühungen insbesondere aufgrund steigender Produktionszahlen die Herstellung und damit die Aushärtezeiten der Flügel und insbesondere der Deckschichten zu verringern. Dies kann beispielsweise durch Erhöhung der Aushärtetemperatur erfolgen. Insbesondere verstärkende Schaumstoffe auf Basis von vernetztem Polyvinylchlorid aber verlieren bei Erwärmung auf erhöhte Temperaturen, beispielsweise Temperaturen größer 75 °C, dauerhaft an mechanischer Stabilität.

Weiter ist es insbesondere bei Flügeln von Windkraftanlagen essentiell, dass diese bei starken Belastungen elastisches Verhalten zeigen und sich zu einem gewissen Maß verbiegen können. Gleiches gilt für Tragflächen. Gleichzeitig sollen die Verstärkungsschäume den durch das Verbiegen auftretenden Scherkräften standhalten können.

Ein wesentlicher Faktor für einen Verstärkungsschaum in Flügeln oder Tragflächen ist sein geringes Gewicht. So können an den Flügelspitzen Umlaufgeschwindigkeiten in der Größenordnung von 100 m/s erreicht werden, wodurch starke Radialkräfte entstehen. Um diese möglichst gering zu halten, ist es wünschenswert, dass der Verstärkungsschaum ein möglichst geringes Gewicht aufweist.

Aufgabe der vorliegenden Erfindung war es daher einen Schaum mit sehr guten mechanischen Eigenschaften, wie hohe Druckfestigkeit und -modul, sowie Zug- und Biegefestigkeit und - moduli sowie eine hohe Scherfestigkeit bei ebenfalls hoher Elastizität und geringer Dichte zu liefern. Weiter soll der Schaum ein hohes Biegeelastizitätsmodul und eine hohe Temperaturbeständigkeit aufweisen und die Herstellung des Schaums soll einfach und das Recycling bzw. die Entsorgung umweltfreundlich möglich sein.

Die erfindungsgemäße Aufgabe wird gelöst durch einen verstärkten Polyurethanschaumstoff mit einer Dichte von größer 50 bis 300 g/L, einer dichteunabhängigen Druckfestigkeit von größer 7,5*10⁻⁴ MPa (L/g)^{1,6}, einem dichteunabhängigen Druck-Elastizitätsmodul von größer 1,7*10⁻² MPa (L/g)^{1,7}, einer Zugfestigkeit von größer 6,4*10⁻⁴ MPa (L/g)^{1,6}, einem Zug-Elastizitätsmodul von größer 2,4*10⁻² MPa (L/g)^{1,7}, vorzugsweise 3,0*10⁻² *10⁻² MPa (L/g)^{1,7}, einer Biegefestigkeit von größer 1,25*10⁻³ MPa (L/g)^{1,6}, vorzugsweise 1,50*10⁻³ MPa (L/g)^{1,6} und einem Biege-Elastizitätsmodul von größer 1,75*10⁻² MPa (L/g)^{1,7}, erhältlich durch Vermischen von (a) Polyisocyanaten mit (b) Verbindungen mit gegenüber Isocyanaten reaktiven Gruppen, (c) Treibmittel, enthaltend Wasser und gegebenenfalls (d) Katalysator und (e) weiteren Additiven zu einer Reaktionsmischung und Aushärten der Reaktionsmischung, wobei die zu härtende Reaktionsmischung 1 bis 40 Gew.-% Mikrohohlkugeln enthält und/oder auf ein poröses Verstärkungsmittel (f), das in der Lage ist, im Polyurethanschaumstoff zweidimensionale oder dreidimensionale Netzwerke zu bilden, aufgetragen wird, die Verbindungen mit gegenüber Isocyanaten reaktiven Gruppen (b) Polyetherole (b1), Polyesterole (b2), Kettenverlängerer (b3) und gegebenenfalls Vernetzer (b4) und aromatische Polyetherdiole (b5) enthalten, und die Komponente (b) einen Anteil an Polyesterolen (b2), Kettenverlängerern (b3) und aromatischen Polyetherdiolen (b5) von mindestens 50 Gew.-%, bezogen auf das Gesamtgewicht der Komponente (b), enthält.
Druck- und Zugwerte werden im Rahmen dieser Offenlegung sowohl senkrecht als auch parallel zur Schäumrichtung gemessen und immer räumlich gemittelt angegeben, berechnet gemäß
(x*y*z)^{1/3} Biegewerte und Scherfestigkeit werden immer senkrecht zur Schäumrichtung gemessen und angegeben.

Dabei wird unter einem verstärkten Polyurethanschaumstoff ein solcher verstanden, bei dem die Mikrohohlkugeln und/oder das Verstärkungsmittel (f) in Form von Lagen oder Lagen und Mikrohohlkugeln vorliegt. Alternativ kann ein dreidimensionales Verstärkungsmittel vorliegen, das ein Netzwerk ausbildet, gegebenenfalls in Kombination mit Mikrohohlkugeln. Vorzugsweise liegt das Verstärkungsmittel in Form von mindestens zwei Lagen vor, die homogen im Schaumstoff verteilt sind und vorzugsweise senkrecht zur Schäumrichtung vorliegen. Dabei bedeutet "homogen verteilt", dass sich der maximale Abstand zweier benachbarter Lagen untereinander bzw. der oberen Lage von der Oberseite des Schaumstoffs bzw. der unteren Lage zu der Unterseite des Schaumstoffs von dem minimalen Abstand zweier Lagen untereinander bzw. der oberen Lage von der Oberseite des Schaumstoffs bzw. der unteren Lage zu der Unterseite des Schaumstoffs um nicht mehr als den Faktor 4, bevorzugt um nicht mehr als den Faktor 2 und insbesondere um nicht mehr als den Faktor 1,5 unterscheidet.

Die Verstärkungsmittel (f) können beispielsweise aus bekannten Glasfasern, Aramidfasern, Kohlefasern oder Fasern aus Kunststoff bestehen, wie beispielsweise Glasfasermatten. Auch ist es möglich, dass die Verstärkungsstoffe aus einer Kombination dieser Werkstoffe bestehen. So kann beispielsweise ein dreidimensionales Verstärkungsmittel aus zwei Glasfasermatten bestehen, die durch Polyamidfasern verbunden sind.

Das lagenförmige Verstärkungsmittel wird in Mengen von mindestens 3,5 bis 35 kg pro m³ Schaum eingesetzt, in Abhängigkeit der Schaumdichte und gewünschten Verstärkungswirkung. Dies beinhaltet z.B. bei einem Schaumkörper mit einer Fläche von 1m² und einer Höhe von 3 cm und einer Schaumdichte von 100 g/L eine Lage eines Verstärkungsmittels mit einer Dichte von 450 g/m². Dabei kann ein lagenförmiges Verstärkungsmittel auch eine dreidimensionale Ausdehnung aufweisen. Weiter sind Kombinationen von Mikrohohlkugeln, lagenförmigem Verstärkungsmittel und/oder dreidimensionalem Verstärkungsmittel möglich.

Der Anteil des Verstärkungsmittels (f) und/oder Mikrohohlkugeln beträgt vorzugsweise 1 bis 40 Gewichtsprozent, insbesondere 2-20 Gewichtsprozent, bezogen auf das Gesamtgewicht des harten Polyurethanschaumstoffs einschließlich Verstärkungsmittel (f) und/oder Mikrohohlkugeln.

Der im erfindungsgemäßen Polyurethanverbundsystem verwendete verstärkte Hartschaum weist eine dichteunabhängige Druckfestigkeit nach DIN 53421/DIN EN ISO 604 von größer 7,5*10⁻⁴ MPa (L/g)^{1,6}, einen dichteunabhängigen Druck-Elastizitätsmodul von größer 1,7*10⁻² MPa (L/g)^{1,7}, eine dichteunabhängige Zugfestigkeit nach DIN 53292/DIN EN ISO 527-1 von größer 6,4*10⁻⁴ MPa (L/g)^{1,6}, einen dichteunabhängigen Zug-Elastizitätsmodul von größer 2,4*10⁻² MPa (L/g)^{1,7}, vorzugsweise 3,0*10⁻² MPa (L/g)^{1,7}, eine dichteunabhängige Biegefestigkeit nach DIN 53423 von größer 1,25*10⁻³ MPa (L/g)^{1,6}, vorzugsweise 1,50*10⁻³ MPa (L/g)^{1,6} und einen dichteunabhängigen Biege-Elastizitätsmodul von größer 1,75*10⁻² MPa (L/g)^{1,7} auf. Weiter weist der erfindungsgemäße, verstärkte Polyurethanhartschaumstoff vorzugsweise eine dichteunabhängige Scherfestigkeit von größer 3,8*10⁻⁴ MPa (L/g)^{1,6} und besonders bevorzugt 5,5*10⁻⁴ MPa (L/g)^{1,6} auf. Die dichteunabhängige Druckfestigkeit wurde gemäß Druckfestigkeit * (Dichte)-^{1,6} und das dichteunabhängige Druck-E-Modul gemäß Druck-E-Modul * (Dichte)^{-1,7} berechnet. Dies bedeutet für ein im erfindungsgemäßen Polyurethanverbundsystem verwendeten verstärkten Hartschaum bei einer Schaumdichte von 100 g/L eine Druckfestigkeit von mindestens 1,19 MPa, bevorzugt mindestens 1,2 MPa und ein Druck-E-Modul von mindestens 42,7 MPa, bevorzugt mindestens 44 MPa, eine Zugfestigkeit von mindestens 1,0 MPa und ein Zug-E-Modul von mindestens 60,3 MPa, bevorzugt mindestens 75 MPa eine Biegefestigkeit von mindestens 1,98 MPa, bevorzugt mindestens 2,38 MPa und ein Biege-E-Modul von mindestens 44 MPa. Dabei weist der erfindungsgemäß verwendete verstärkte Polyurethanhartschaumstoff eine Dichte von größer 50 g/L bis 300 g/L, bevorzugt 80 g/L bis 250 g/L, besonders bevorzugt 100 g/L bis 220 g/L auf.

Weiter weisen die erfindungsgemäßen verstärkten Hartschaumstoffe vorzugsweise eine Erweichungstemperatur von mehr als 100 °C, besonders bevorzugt mehr als 120 und insbesondere mehr als 140 °C auf. Dabei handelt es sich bei der Erweichungstemperatur um die Temperatur, bei der der erfindungsgemäße Polyurethanhartschaum sein maximales Verlustmodul G" in der Dynamisch Mechanischen Analyse (DMA) zeigt, gemäß DIN EN ISO 6721-2. Dabei ermöglicht eine hohe Erweichungstemperatur die Herstellung der erfindungsgemäßen Verbundelemente bei höherer Temperatur ohne Strukturänderungen im Schaum, die zu drastisch verschlechterten mechanischen Eigenschaften führen.

Als Isocyanate (a) können alle gewöhnlichen aliphatischen, cycloaliphatischen und bevorzugt aromatische Di- und/oder Polyisocyanate verwendet werden, die eine Viskosität von weniger als 600mPas, bevorzugt von weniger als 500 mPas und besonders bevorzugt weniger als 350 mPas, gemessen bei 25 °C, aufweisen. Besonders bevorzugt werden als Isocyanate Toluoldiisocyanat (TDI) Diphenylmethandiisocyanat (MDI) und Mischungen aus Diphenylmethandiisocyanat und höherkemigen Homologen des Diphenylmethandiisocyanat, dem Polymethylphenylpolyisocyanat, eingesetzt. Insbesondere werden Mischungen aus Diphenylmethandiisocyanat und Polymethylphenylpolyisocyanat (PMDI) eingesetzt. Diese besonders bevorzugten Isocyanate können ganz oder teilweise mit Uretdion-, Carbamat-, Isocyanurat-, Carbodiimid-, Allophanatund bevorzugt Urethangruppen modifiziert sein.

Weiterhin können als Isocyanatkomponente Prepolymere sowie Mischungen aus den oben beschriebenen Isocyanaten und Prepolymeren eingesetzt werden. Diese Prepolymere werden aus den oben beschriebenen Isocyanaten sowie den weiter unten beschriebenen Polyethern, Polyestern oder beiden hergestellt und weisen einen NCO-Gehalt von 14 bis 32 Gew.-%, bevorzugt 22 bis 30 Gew.-%, auf.

Als Verbindungen mit gegenüber Isocyanaten reaktiven Gruppen (b) können alle Verbindungen eingesetzt werden, die zumindest zwei gegenüber Isocyanaten reaktive Gruppen, wie OH-, SH-, NH- und CH-acide Gruppen, aufweisen. Dabei weist im Rahmen der vorliegenden Erfindung die Komponente (b) Polyetherole (b1), Polyesterole (b2), Kettenverlängerer (b3) und gegebenenfalls Vernetzer (b4) und/oder aromatische Polyetherdiole (b5) auf, wobei dies so zu verstehen ist, dass Vernetzer (b4) und aromatische Polyetherdiole (b5) unabhängig voneinander enthalten sein können.

Die Polyetherole (b1) werden nach bekannten Verfahren, beispielsweise durch anionische Polymerisation von Alkylenoxiden unter Zusatz mindestens eines Startermoleküls, das 2 bis 8, vorzugsweise 2 bis 6 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, sowie amin-basierte Katalysatoren eingesetzt werden.

Vorzugsweise werden als Alkylenoxide eine oder mehrere Verbindungen mit 2 bis 4 Kohlenstoffatomen im Alkylenrest, wie Tetrahydrofuran, 1,3-Propylenoxid, 1,2- bzw. 2,3-Butylenoxid, jeweils alleine oder in Form von Mischungen, und vorzugsweise Ethylenoxid und/oder 1,2-Propylenoxid eingesetzt.

Als Startermoleküle kommen beispielsweise Ethylenglycol, Diethylenglycol, Propylenglycol, Dipropylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Vorzugsweise weisen die Polyetherole (b1) mindestens ein Polyetherol (b1 a) mit einer mittleren Funktionalität von 3,5 oder größer, vorzugsweise 3,6 bis 8 und insbesondere 3,8 bis 6 und einer Viskosität bei 25 °C von 15.000 mPas oder kleiner, bevorzugt 10.000 mPas oder kleiner auf. Dabei liegt das Molekulargewicht vorzugsweise in einem Bereich von 300 - 900 g/mol, bevorzugt 400 - 800 g/mol und insbesondere 450 - 750 g/mol. Der Anteil der Polyetherole (b1 a) am Gesamtgewicht der Komponente (b) beträgt vorzugsweise 20 bis 50 Gew.-%, besonders bevorzugt 25 bis 40 Gew.-%. Dabei kann das Polyetherol (b1) auch 0 bis 20 Gew.-%, vorzugsweise 1 bis 10 Gew.-% eines Polyetherols (b1 b) mit einem Molekulargewicht von größer als 300 bis 3000 g/mol, vorzugsweise von 400 bis 2500 g/mol, und insbesondere 400 bis 1000 g/mol enthalten. Die Polyetherole (b1 b) weisen dabei vorzugsweise eine mittlere Funktionalität von 1,8 bis 3,0, besonders bevorzugt 1,95 bis 2,2 auf und weisen vorzugsweise sekundäre OH-Gruppen auf.

Die eingesetzten Polyesteralkohole (b2) werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren oder den Anhydriden der genannten Säuren, hergestellt. Vorzugsweise werden aromatische Disäuren, wie Phthalsäure, Isophthalsäure und/oder Terephthalsäure sowie deren Anhydride als Säurekomponente und Ethylenglycol, Diethylenglycol, 1,4 Butandiol und/oder Glycerin als Alkoholkomponente eingesetzt.

In einer weiteren Ausführungsform können zur Herstellung von Polyesteralkoholen (b2) anstatt der Disäuren oder deren Anhydriden auch entsprechende monomere Ester, wie z.B. Dimethylterephthalat, oder polymere Ester, wie z.B. Polyethylenterephthalat (PET), eingesetzt werden.

Als weitere Ausgangsstoffe bei der Herstellung der Polyester können auch hydrophobe Stoffe mit verwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol%, besonders bevorzugt 4 bis 15 Mol %. Diese Polyester, enthaltend hydrophobe Stoffe, werden im Folgenden als hydrophobe Polyester bezeichnet. Der Anteil der hydrophoben Polyester, bezogen auf das Gesamtgewicht der Polyesterole (b2) beträgt vorzugsweise 0 bis 80 Gew.-%, besonders bevorzugt 5 bis 60 Gew.-%.

Die eingesetzten Polyesterole (b2) haben vorzugsweise eine mittlere Funktionalität von 1,5 bis 5, besonders bevorzugt 1,8 - 3,5 und insbesondere von 1,9 bis 2,2 und Viskositäten bei 25 °C von vorzugsweise kleiner 3000 mPas, besonders bevorzugt kleiner 2500 mPas. Dabei liegt das Molekulargewicht vorzugsweise in einem Bereich von 290 bis 1000 g/mol, bevorzugt 320 bis 800 g/mol und insbesondere 340 bis 650 g/mol.

In einer bevorzugten Ausführungsform enthält die Komponente (b) zu mindestens 50 Gew.-%, bezogen auf das Gesamtgewicht der Komponente (b), Polyesterole (b2). Ganz besonders bevorzugt enthalten die Polyester (b2) in diesem Fall hydrophobe Polyester.

Ferner enthält die Verbindung mit gegenüber Isocyanaten reaktiven Gruppen (b) Kettenverlängerungsmittel (b3) und gegebenfalls Vernetzungsmittel (b4). Als Kettenverlängerungs- und/oder Vernetzungsmittel kommen insbesondere zwei- oder dreifunktionelle Amine und Alkohole, insbesondere Diole, Triole oder beide, jeweils mit Molekulargewichten kleiner als 300 g/mol, vorzugsweise von 60 bis 300 g/mol, und insbesondere 60 bis 250 g/mol zum Einsatz. Dabei spricht man bei zweifunktionellen Verbindungen von Kettenverlängerern (b3) und bei tri- oder höherfunktionellen Verbindungen von Vernetzern (b4). In Betracht kommen beispielsweise aliphatische, cycloaliphatische und/oder aromatische Diole mit 2 bis 14, vorzugsweise 2 bis 10 Kohlenstoffatomen, wie Ethylenglykol, 1,2-, 1,3-Propandiol, 1,2-, 1,3-Pentandiol, 1,10-Decandiol, 1,2-, 1,3-, 1,4-Dihydroxycyclohexan, Di- und Triethylenglykol, Di- und Tripropylenglykol, 1,4-Butandiol, 1,6-Hexandiol und Bis-(2-hydroxyethyl)-hydrochinon, Triole und höhere Polyole, wie 1,2,4-, 1,3,5-Trihydroxy-cyclohexan, Glycerin und Trimethylolpropan, N, N, N', N'-Tetrakis (2-hydroxypropyl)ethylen-diamin, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Vorzugsweise beträgt der Anteil der Vernetzer (b4) an dem Gesamtgewicht der Komponente (b) 0 bis 40 Gew.-%, besonders bevorzugt 1 bis 30 Gew.-%. Insbesondere bei der Herstellung von Schäumen für die Isolation von Flüssigerdgastanks werden vorzugsweise 0,5 bis 8 Gew.-% und insbesondere 1 bis 5 Gew.-% Vernetzer eingesetzt, wobei als Vernetzer vorzugsweise Glycerin eingesetzt wird.

Der Kettenverlängerer (b3) weist im Mittel mindestens 30 %, vorzugsweise mindestens 40, besonders bevorzugt mindestens 50 und insbesondere mindestens 60% sekundäre OH-Gruppen auf. Dabei kann es sich bei dem Kettenverlängerer (b3) um Einzelverbindungen oder Mischungen handeln. Der Kettenverlängerer (b3) enthält vorzugsweise Monopropylenglycol, Dipropylenglycol, Tripropylenglycol und/oder 2,3-Butandiol alleine oder gegebenenfalls in Mischungen untereinander oder mit weiteren Kettenverlängerern. So wird in einer besonders bevorzugten Ausführungsform Dipropylenglycol zusammen mit einem zweiten Kettenverlängerer, beispielsweise 2,3-Butandiol, Monopropylenglycol oder Diethylenglycol, als Kettenverlängerer (b3) eingesetzt. Als Vernetzungsmittel (b4) wird vorzugsweise 1,2,4-, 1,3,5-Trihydroxy-cyclohexan, Glycerin, N, N, N', N'-Tetrakis (2-hydroxypropyl) ethylene-diamin und /oder Trimethylolpropan, eingesetzt. Vorzugsweise wird als Vernetzungsmittel Glycerin oder N, N, N', N'-Tetrakis (2-hydroxypropyl)ethylen-diamin , insbesondere Glycerin eingesetzt.

Das aromatische Polyetherdiol (b5) ist ein Alkoxylierungsprodukt aus einem aromatischen Diol, bevorzugt Bisphenol A, und Ethylenoxid und/oder Propylenoxid. Das aromatische Polyetherdiol (b5) hat somit eine bevorzugte Funktionalität von 2 und ein zahlenmittleres Molekulargewicht von größer 300 g/mol, vorzugsweise von größer 300 bis 600 g/mol.

Die Komponente (b) weist 5 bis 50 Gew.-% Kettenverlängerer (b3) auf. Vorzugsweise weist die Komponente (b) 8 bis 50, besonders bevorzugt 10 bis 30 Gew.-% Kettenverlängerer (b3) auf.

Dabei ist es erfindungswesentlich, dass die Komponente (b) einen Anteil an Polyesterolen (b2), Kettenverlängerern (b3) und aromatischen Polyetherolen (b5) von mindestens 50 Gew.-%, bevorzugt 50 bis 80 Gew.-%, besonders bevorzugt 55 bis 75 Gew.-% und insbesondere 60 bis 70 Gew.-%, bezogen auf das Gesamtgewicht der Komponente (b), enthält. Als Komponenten (b1) bis (b5) können dabei jeweils einzelne Verbindungen oder Mischungen eingesetzt werden, wobei jede der eingesetzten Verbindungen unter die Definition von (b1) bis (b5) fällt.

Vorzugsweise weist die Komponente (b) mindestens 50 Gew.-%, besonders bevorzugt mindestens 55 bis 85 und insbesondere 60 bis 75 Gew.-% Verbindungen mit zwei oder drei gegenüber Isocyanat reaktiven Gruppen auf. Diese Verbindungen mit zwei oder drei gegenüber Isocyanaten reaktiven Gruppen haben vorzugsweise ein Molekulargewicht von kleiner 2500 g/mol, bevorzugt kleiner 1000 g/mol, insbesondere kleiner 800 g/mol. Vorzugsweise beträgt das zahlenmittlere Molekulargewicht dieser Verbindungen maximal 500 g/mol, besonders bevorzugt 150 bis 450 g/mol und insbesondere 250 bis 450 g/mol.

Der Anteil der Polyetherole (b1), (b2), (b3) und gegebenenfalls (b4) und (b5) an der Verbindung mit gegenüber Isocyanaten reaktiven Gruppen (b) beträgt vorzugsweise zumindest 80 Gew.-%, besonders bevorzugt zumindest 90 Gew.-% und insbesondere 100 Gew.-%, bezogen auf das Gesamtgewicht der Verbindung mit gegenüber Isocyanaten reaktiven Gruppen (b). Vorzugsweise ist die molare Gesamtfunktionalität der Komponente (b) kleiner als 3,0, besonders bevorzugt zwischen 2,0 und 2,9 und insbesondere zwischen 2,4 und 2,8. Die mittlere OH-Zahl der Komponente (b) ist vorzugsweise größer als 300 mg KOH/g, besonders bevorzugt zwischen 350 und 1000 mg KOH/g und insbesondere zwischen 400 und 600 mg KOH/g.

Werden als Isocyanate (a) Isocyanatprepolymere eingesetzt, wird der Gehalt an Verbindungen mit gegenüber Isocyanaten reaktiven Gruppen (b), inklusive den zur Herstellung der Isocyanatprepolymere eingesetzten Verbindungen mit gegenüber Isocyanaten reaktiven Gruppen (b) berechnet.

Als Treibmittel (c) wird Treibmittel, enthaltend Wasser, eingesetzt. Dabei kann Wasser alleine oder in Kombination mit weiteren Treibmitteln eingesetzt werden. Der Gehalt an Wasser im Treibmittel (c) ist vorzugsweise größer als 40 Gew.-%, besonders bevorzugt größer als 60 Gew.-% und ganz besonders bevorzugt größer als 80 Gew.-%, bezogen auf das Gesamtgewicht des Treibmittels (c). Insbesondere wird Wasser als alleiniges Treibmittel eingesetzt. Werden neben Wasser weitere Treibmittel eingesetzt, können beispielsweise Fluorchlorkohlenwasserstoffe, Fluorkohlenwasserstoffe, Kohlenwasserstoffe, Säuren und flüssiges bzw. gelöstes Kohlendioxid verwendet werden. Vorzugsweise enthalten Treibmittel (c) weniger als 50 Gew.-%, mehr bevorzugt weniger als 20 Gew.-%, besonders bevorzugt weniger als 10 Gew.-% und insbesondere 0 Gew.%, bezogen auf das Gesamtgewicht des Treibmittels (c), Fluorchlorkohlenwasserstoffe, Fluorkohlenwasserstoffe und/oder Kohlenwasserstoffe. In einer weiteren Ausführungsform kann als Treibmittel (c) eine Mischung aus Wasser und Ameisensäure und/oder Kohlendioxid eingesetzt werden. Um das Treibmittel einfacher in der Polyolkomponente dispergieren zu können, kann das Treibmittel (c) mit polaren Verbindungen, wie Dipropylenglycol, vermischt sein.

Die Treibmittel (c) werden in einer solchen Menge eingesetzt, dass die Dichte des harten Polyurethanschaumstoffs, der durch Reaktion der Komponenten (a) bis (e) entsteht, inklusive Verstärkungsmittel (f) und/oder Mikrohohlkugeln, im Bereich von größer 50 g/L bis 300 g/L, bevorzugt 80 g/L bis 250 g/L, besonders bevorzugt 100 g/L bis 220 g/L liegt. Werden die erfindungsgemäßen Polyurethanhartschaumstoffe ausschließlich durch den Einsatz von Glashohlkugeln verstärkt, werden die Treibmittel (c) werden in einer solchen Menge eingesetzt, dass die Dichte des harten Polyurethanschaumstoffs, der durch Reaktion der Komponenten (a) bis (e) entsteht, inklusive Mikrohohlkugeln, im Bereich von größer 30 g/L bis 250 g/L, bevorzugt 60 g/L bis kleiner 160 g/L und besonders bevorzugt 80 g/L bis kleiner als 110 g/L liegt.

Als Katalysatoren (d) können alle Verbindungen eingesetzt werden, die die Isocyanat-Wasser-Reaktion oder die Isocyanat-Polyol-Reaktion beschleunigen. Solche Verbindungen sind bekannt und beispielsweise im "Kunststoffhandbuch, Band 7, Polyurethane", Carl Hanser Verlag, 3. Auflage 1993, Kapitel 3.4.1 beschrieben. Diese umfassen aminbasierte Katalysatoren und Katalysatoren auf Basis von organischen Metallverbindungen.

Als Katalysatoren auf Basis von organischen Metallverbindungen können beispielsweise organische Zinnverbindungen, wie Zinn-(II)-salze von organischen Carbonsäuren, wie Zinn-(II)-acetat, Zinn-(II)-octoat, Zinn-(II)-ethyl-hexoat und Zinn-(II)-laurat und die Dialkylzinn-(IV)-salze von organischen Carbonsäuren, wie Dibutyl-zinndiacetat, Dibutylzinndilaurat, Dibutylzinnmaleat und Dioctylzinn-diacetat, sowie Bismutcarboxylate wie Bismut(III)-neodecanoat, Bismut-2-ethylhexanoat und Bismut-octanoat oder Alkalisalze von Carbonsäuren, wie Kaliumacetat oder Kaliumformiat eingesetzt werden.

Vorzugsweise wird als Katalysator (d) eine Mischung, enthaltend zumindest ein tertiäres Amin, eingesetzt. Bei diesen tertiären Aminen handelt es sich gewöhnlich um Verbindungen, die auch gegenüber Isocyanat reaktive Gruppen, wie OH-, NH- oder NH₂-Gruppen, tragen können. Einige der am häufigsten eingesetzten Katalysatoren sind Bis(2-Dimethyl-aminoethyl)ether, N,N,N,N,N-Pentamethyldiethylentriamin, N,N,N-Triethylamino-ethoxyethanol, Dimethylcyclohexylamin, Dimethylbenzylamin, Triethyl-amin, Triethylendiamin, Pentamethyldipropylentriamin, Dimethylethanolamin, N-Methylimidazol, N-Ethylimidazol, Tetramethylhexamethylendiamin, Tris-(Dimethylaminopropyl)hexahydrotriazin, Dimethylaminopropylamin, N-Ethylmorpholin, Diazabicycloundecen und Diazabicyclononen. Falls geringe Migration von Katalysatoren aus den erfindungsgemäßen Schaumstoffen und/oder eine geringe Emission an VOC Verbindungen gewünscht ist, können auch einbaubare Katalysatoren eingesetzt werden. Auch kann ganz auf Katalysatoren verzichtet werden.

Vorzugsweise werden die Mikrohohlkugeln ausgewählt aus der Gruppe bestehend aus thermoplastischen Mikrohohlkugeln, Mikrohohlkugeln aus Glas und Mikrohohlkugeln aus Glaskeramik. Beispiele für Mikrohohlkugeln aus Glas bzw. Glaskeramik sind die kommerziell erhältlichen Mikrohohlkugeln Z-Lite W-1000 von Zeelan Industries und Scotchlite von 3M sowie CEL 300 und 650 von PQ Corporation.

Bevorzugt ist die Verwendung von thermoplastischen Mikrohohlkugeln. Die hierin verwendeten thermoplastischen Mikrohohlkugeln sind dem Fachmann bekannt und im Handel unter dem Produktnamen Expancel (Akzo Nobel) bei Schönox GmbH (Essen Deutschland) kommerziell erhältlich. Es handelt sich hierbei um Mikrohohlkugeln, deren Hülle aus einem Mischpolymer basierend auf Acrylnitril besteht und deren Hohlraum mit einem Treibgas gefüllt ist. In der Regel haben die unexpandierten Mikrohohlkugeln einen Durchmesser von 6 bis 45 µm und eine Dichte von 1000 bis 1300 g/L. Bei den Treibgasen handelt es sich typischerweise um flüchtige Kohlenwasserstoffe wie beispielsweise Butan, Pentan, Hexan, Heptan, Isobuten, Isopentan, Neopentan, Cyclopropan, Cyclobutan und Cyclopropan. Sofern erforderlich können diese Hohlkugeln auch mit beliebig anderen niedrig siedenden Lösungsmitteln hergestellt und gefüllt werden. Sofern die Mikrohohlkugeln erhitzt werden, erhöht das Gas den Innendruck, die Polymerschicht erweicht und der Expansionsprozess beginnt. Nach vollständiger Expansion hat die Mikrohohlkugel ihren Durchmesser um das Drei- bis Vierfache des ursprünglichen Durchmessers und ihr Volumen um mehr als das Vierzigfache ihres ursprünglichen Volumens erhöht. Die Dichte liegt nach dem Expansionsprozess bei 30 g/L. Die Expansionstemperaturen liegen in der Regel im Bereich zwischen 80 - 190 °C. Nach der Abkühlung verfestigt sich der thermoplastische Kunststoff wieder, sodass das expandierte Volumen erhalten bleibt.

Als poröses Verstärkungsmittel (f), das in der Lage ist, im Polyurethanschaumstoff lagenförmige, das heißt zweidimensionale, oder dreidimensionale Netzwerke zu bilden, können alle Materialien eingesetzt werden, die dem harten Polyurethanschaumstoff eine noch höhere mechanische Stabilität verleihen und im erfindungsgemäßen Polyurethanhartschaumstoff in Form von zweidimensionalen oder dreidimensionalen Netzwerken vorliegt. Ein Beispiel für eine ein zweidimensionales Netzwerk bildendes Verstärkungsmittel ist eine Fasermatte, beispielsweise eine Glasfasermatte, ein Beispiel für ein dreidimensionales Verstärkungsmittel sind mehrere, untereinander vernetzte Fasermatten oder Rovings, die vorzugsweise ebenfalls untereinander vernetzt sind. Als porös werden die Verstärkungsmittel im Rahmen der vorliegenden Erfindung bezeichnet, wenn die Reaktionsmischung zur Herstellung des Polyurethanhartschaumstoffs in das Verstärkungsmittel eindringen und dieses durchdringen und vollständig benetzen kann. Die das dreidimensionale Verstärkungsmittel bildenden Materialien, beispielsweiseRovings oder Bänder, sind vorzugsweise miteinander verbunden, beispielsweise durch Verschlaufungen oder Verknüpfungen. Zur Bildung von dreidimensionalen Verstärkungsmitteln können auch mehrere zweidimensionale Verstärkungsmittel, wie Fasermatten, miteinander verknüpft werden. Weiter können als dreidimensionale Verstärkungsmittel verdrillte oder verflochtene Faserstränge, wie Faserzöpfe, eingesetzt werden.

Solche porösen Verstärkungsmittel (f), die in der Lage sind im Polyurethanschaumstoff lagenförmige oder dreidimensionale Netzwerke zu bilden, sind beispielsweise Gewebe oder Gewirken auf Basis von Fasern. Beispiele für bevorzugt eingesetzte poröse, zweidimensionale Verstärkungsmittel sind Fasermatten, wie beispielsweise Glasfaser-, Aramidfaser- oder Kohlefasermatten oder Matten aus Fasern aus Kunststoff oder Bänder aus diesen Materialien, bevorzugt Glasfasermatten, beispielsweise Unifilo® U801 oder U809 der Firma Owens Corning Vetrotex. Auch können Glasfaserrovingmatten eingesetzt werden. Der Anteil des Verstärkungsmittels (f) beträgt vorzugsweise 1 bis 40, bevorzugt 2 bis 20 Gewichtsprozent, bezogen auf das Gesamtgewicht der Komponenten (a) bis (f).

Als weitere Additive (e) können Flammschutzmittel, Weichmacher, Schaumstabilisatoren, weitere Füllstoffe und sonstige Zusatzstoffe, wie Antioxidantien eingesetzt werden. Vorzugsweise werden zumindest Flammschutzmittel oder Weichmacher eingesetzt.

Als Flammschutzmittel können im allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten PolyurethanHartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 25% bezogen auf das Gesamtgewicht der Komponenten (b) bis (e) verwendet.

Als Weichmacher seien beispielsweise Ester von mehrwertigen, vorzugsweise zweiwertigen Carbonsäuren mit einwertigen Alkoholen genannt. Die Säurekomponente solcher Ester kann sich z.B. herleiten von Bemsteinsäure, Isophpthalsäure, Terephthalsäure, Trimellitsäure, Zitronensäure, Phthalsäureanhydrid, Tetra- und/oder Hexahydrophthalsäureanhydrid, Endomethylen-tetrahydrophthalsäureanhydrid, Glutarsäureanhydrid, Maleinsäureanhydrid, Fumarsäure und/oder dimeren und/oder trimeren Fettsäuren wie Ölsäure, gegebenenfalls in Mischung mit monomeren Fettsäuren. Die Alkoholkomponente solcher Ester kann sich z.B. herleiten von verzweigten und/oder unverzweigten aliphatischen Alkoholen mit 1 bis 20 C-Atomen, wie Methanol, Ethanol, Propanol, Isopropanol, n-Butanol, sek.-Butanol, tert.-Butanol, den verschiedenen Isomeren des Pentylalkohols, Hexylalkohols, Octylalkohols (z.B. 2-Ethyl-Hexanol), Nonylalkohols, Decylalkohols, Laurylalkohols, Myristylalkohols, Cetylalkohols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe, Phenol, Kresol, Thymol, Carvacrol, Benzylalkohol und/oder Phenylethanol. Als Weichmacher können auch Ester von einwertigen Carbonsäuren mit zweiwertigen Alkoholen verwendet werden, wie Texanolesteralkohole, beispielsweise 2,2,4-Trimethyl-1,3-pentandiol diisobutyrat (TXIB) oder 2,2,4-Trimethyl-1,3-pentandiol dibenzoat; Diester aus Oligoalkylenglykolen und Alkylcarbonsäuren, beispielsweise Triethylenglykol-dihexanoat oder Tetraethylenglykol-diheptanoat und analoge Verbindungen.

Als Weichmacher kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden.

Bei den Weichmachern kann es sich auch um sogenannte polymere Weichmacher handeln, z.B. um Polyester der Adipin-, Sebacin- und/oder Phthalsäure.

Weiter sind auch Alkylsulfonsäureester des Phenols, z.B. Paraffinsulfonsäurephenylester, und aromatische Sulfonamide, z.B. Ethylltoluolsulfonamid, als Weichmacher verwendbar. Auch Polyether, beispielsweise Triethylenglykoldimethylether sind als Weichmacher verwendbar.

Vorzugsweise wird der Weichmacher in einer Menge von 0,1 bis 15, besonders bevorzugt von 0,5 bis 10 Gew.-%, bezogen auf das Gesamtgewicht der Komponenten b) bis e) eingesetzt. Durch den Zusatz von Weichmacher können dabei die mechanischen Eigenschaften des harten Polyurethanschaumstoffs, insbesondere bei tiefen Temperaturen weiter verbessert werden.

Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden bevorzugt in einer Menge von 0,5 bis 4, besonders bevorzugt 1 bis 3 Gew.-%, bezogen auf das Gesamtgewicht der Komponenten (b) bis (e), verwendet.

Als weitere Füllstoffe, insbesondere verstärkend wirkende Füllstoffe, sind die an sich bekannten, üblichen organischen und anorganischen Füllstoffe zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0 bis 30 Gew.%, besonders bevorzugt 1 bis 15 Gew.%, bezogen auf das Gewicht der Komponenten (a) bis (e), einverleibt. Dabei werden die zuvor genannten Verstärkungsmittel (f) und/oder Mikrohohlkugeln im Rahmen der Erfindung nicht als Füllstoffe angesehen und bei der Berechnung der Anteile nicht unter der Komponente (e) berücksichtigt.

Ein weiterer Gegenstand der Erfindung ist ein Verfahren zur Herstellung eines verstärkten Polyurethanschaumstoffs, bei dem man (a) Polyisocyanate, (b) mit Verbindungen mit gegenüber Isocyanaten reaktiven Gruppen, (c) Treibmittel, enthaltend Wasser, (d) einer Katalysatormischung und gegebenenfalls Mikrohohlkugeln und (e) weiteren Additiven, zu einer Reaktionsmischung vermischt, die Reaktionsmischung auf mindestens ein Verstärkungsmittel (f) aufträgt, aushärtet, wobei die Verbindungen mit gegenüber Isocyanaten reaktiven Gruppen (b) Polyetherole (b1), Polyesterole (b2) Kettenverlängerer (b3) und gegebenenfalls Vernetzer (b4) und aromatische Polyetherdiole (b5) enthalten, und die Komponente (b) einen Anteil an Polyesterolen (b2) und Kettenverlängerern (b3) von mindestens 50 Gew.-%, bezogen auf das Gesamtgewicht der Komponente (b), enthält. Zu dem erfindungsgemäßen Verfahren werden die oben beschriebenen Einsatzstoffe verwendet. Die Polyurethanreaktionsmischung dringt dabei vorzugsweise in das Verstärkungsmittel ein und benetzt dieses gleichmäßig. Die aufschäumende Polyurethanreaktionsmischung führt dann zu einer homogenen Verteilung des Verstärkungsmittels im Schaum, wobei beispielsweise die Lagen eines lagenförmigen Verstärkungsmittels senkrecht zur Schäumrichtung ausgerichtet sind.

Vorzugsweise erfolgt die Herstellung des erfindungsgemäßen harten Polyurethanschaumstoffs kontinuierlich auf einem Band. Dazu werden vorzugsweise die Komponenten (b) bis (d) und gegebenenfalls Mikroglashohlkugeln und (e) zu einer Polyolkomponente vermischt. Diese werden anschließend vorzugsweise in einer Niederdruckmischvorrichtung, einer Hochdruckmischvorrichtung bei vermindertem Druck von kleiner 100 bar oder einer Hochdruckmaschine mit der Isocyanat-Komponente (a) vermischt. Alternativ können auch die Komponenten (a) bis (d) und gegebenenfalls Mikrohohlkugeln und (e) jeweils einzeln in die Mischvorrichtung gegeben werden. Anschließend wird die so erhaltene Reaktionsmischung auf das Verstärkungsmittel (f), vorzugsweise auf die Glasfasermatten gegeben, die vorzugsweise von mehreren Trommeln (beispielweise 4-10, bevorzugt 5, 6 oder 7) kontinuierlich auf das Band abgerollt werden und dort eine entsprechende Anzahl an Lagen bilden. Anschließend wird der erhaltene Schaum vorzugsweise auf dem Band soweit ausgehärtet, dass dieser ohne Beschädigung in Stücke geschnitten werden kann. Dies kann bei erhöhten Temperaturen, beispielsweise beim Durchlauf durch einen Ofen, erfolgen. Die erhaltenen Schaumstücke werden dann vorzugsweise weiter gelagert, um die volle mechanische Belastbarkeit zu erhalten.

Eine andere Art der Herstellung des erfindungsgemäßen harten Polyurethanschaumstoffs ist das diskontinuierliche Verschäumen der Reaktionsmischungen in einer Form. Das erfindungsgemäße Verstärkungsmittel kann hier vor oder gleichzeitig mit der Reaktionsmischung in die Form eingetragen werden.

Anschließend wird der erhaltene Polyurethanhartschaumstoff für die weitere Verarbeitung in die benötigte Form geschnitten.

Isocyanate (a) und Verbindungen mit gegenüber Isocyanat reaktiven Gruppen (b), Treibmittel, enthaltend Wasser (c) und gegebenenfalls Katalysatoren (d) und weitere Additive (e) werden vorzugsweise in solchen Mengen zur Umsetzung gebracht, dass der Isocyanatindex im Bereich von 100 bis 400, bevorzugt 100 - 200, besonders bevorzugt 100 - 150 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Besonders vorteilhaft ist, dass die erfindungsgemäßen Reaktionsmischungen schnell in die Verstärkungsmittel (f) eindringen und dadurch eine gleichmäßige Verteilung der Verstärkungsmittel (f) im erhaltenen Polyurethanhartschaumstoff begünstigt wird. Ebenfalls vorteilhaft ist die lange Startzeit der erfindungsgemäßen Reaktionsmischungen bei kurzer Reaktionszeit.

Der erfindungsgemäße verstärkte Polyurethanschaumstoff zeigt hervorragende mechanische Eigenschaften, wie hohe Druckfestigkeit und -modul, sowie Zug- und Biegefestigkeit und - moduli sowie eine hohe Scherfestigkeit bei ebenfalls hoher Elastizität und geringer Dichte zu liefern. Der erfindungsgemäße verstärkte Polyurethanschaum weist weiter ein hohes Biegeelastizitätsmodul und eine hohe Temperaturbeständigkeit auf und kann einfach und umweltfreundlich hergestellt werden. Auch ist eine umweltfreundliche Entsorgung von Polyurethanschaumstoffen möglich. So ist ein Polyurethanschaumstoff beispielsweise durch Glykolyse wieder in seine Ausgangsverbindungen zerlegbar, die als Rohstoffe erneut verwendet werden können.

Dabei wird der erfindungsgemäße Schaum vorzugsweise als Schaum im Rahmen eines Sandwichbauteils verwendet, dessen Deckschichten vorzugsweise aus faserverstärktem Harz bestehen. Dabei kann als Harz beispielsweise ein bekanntes Epoxyd-, Polyester-, oder Polyurethanharz eingesetzt werden, das in üblicher Weise auf den Polyurethanschaum auflaminiert wird. Alternativ kann der erfindungsgemäße Polyurethanschaum auch mit einer solchen Deckschicht verklebt oder auf dieser hergestellt werden. Dabei kann das faserverstärkt Harz als Form oder Teil einer Form eingesetzt werden. Neben faserverstärkten Harzen können die Deckschichten auch aus thermoplastischen Kunststoffen, Holzwerkstoffen oder Metall bestehen. Dabei kann die Deckschicht einen Teil des Schaums oder den gesamten Schaum umschließen. Wird dieser von einer Deckschicht umschlossen, so kann der erfindungsgemäße Schaum einen Teil oder den gesamten Innenraum des Sandwichbauteils ausfüllen. Wird nur ein Teil des Sandwichbauteils von dem erfindungsgemäßen Schaum ausgefüllt, bildet dieser vorzugsweise eine verstärkende Lage im Sandwichbauteil, wobei der verbleibende Raum im Innern des Sandwichbauteils vorzugsweise ungefüllter Gasraum darstellt.

Der erfindungsgemäße verstärkte Polyurethanschaumstoff kann daher als Verstärkungsschaum in Flügeln, beispielsweise Rotorflügeln, und Tragflächen von Luftfahrzeugen, insbesondere als Kernschaum eingesetzt werden. Dabei handelt es sich bei Kernschäumen um verstärkende Lagen in einem Flügel oder in einer Tragfläche, die entweder den gesamten Kern ausfüllen oder im Fall von Hohlflügeln eine innere, verstärkende Lage bilden, die unterhalb des Oberflächenmaterials, das beispielsweise aus Glasfaserharzen besteht, liegt. Vorzugsweise wird ein erfindungsgemäßes Sandwichbauteil als Flügel oder Tragfläche eingesetzt. Eine weitere Einsatzmöglichkeit eines Sandwichbauteils ist die Verwendung als Bootsrumpf oder als lasttragendes steifes Flächenelement.

Weiter kann der erfindungsgemäße verstärkte Polyurethanschaum als Isolationsmaterial für Flüssigerdgastanks, insbesondere an Bord von Schiffen eingesetzt werden.

Im Folgenden wird die Erfindung anhand von Beispielen verdeutlicht.

Herstellung von verstärkten Polyurethanhartschaumstoffen (Variante 1):

**Tabelle 1:**

| | 1 | 2 | V1 | V2 | V3 |
|---|---|---|---|---|---|
| Polyether 1 | | | 40 | 40 | 40 |
| Polyether 2 | | | 25 | 25 | 25 |
| Polyether 3 | 28 | 28 | | | |
| Polyether 4 | 20 | 20 | | | |
| Polyester 1 | 37 | 17 | 25 | 25 | 25 |
| Kettenverlängerer 1 | 12 | 12 | 10 | 10 | 10 |
| Aromatisches Diol | | 20 | | | |
| Wasser | 2 | 2 | 1,0 | 1,0 | 1,0 |
| Katalysator 1 | | | 0,08 | 0,08 | 0,08 |
| Stabilisator 1 | 1 | 1 | 1,5 | 1,5 | 1,5 |
| Isocyanat 1 | | | 126 | 126 | 126 |
| Isocyanat 2 | 142 | 152 | | | |
| Lagen Glasfasermatten | 0 | 0 | 0 | 7 | |
| Glashohlkugeln | 17 | 8,2 | | | 8,0 |
| Schaumdichte in g/L | 100 | 100 | 100 | 112 | 100 |
| Druckfestigkeit in MPa | 1,42 | 1,39 | 0,91 | 1,15 | 0,84 |
| Druck-E-Modul in MPa | 52,1 | 43,6 | 24,8 | 43,1 | 23,4 |
| Zugfestigkeit in MPa | 1,11 | 1,16 | n.b. | n.b. | n.b. |
| Zug-E-Modul in MPa | 63,4 | 62,4 | n.b. | n.b. | n.b. |
| 3-Punktbiegefestigkeit in Mpa | 2,03 | 2,11 | 1,62 | 1,91 | n.b. |
| 3-Punktbiege-E-Modul in MPa | 55,1 | 51,2 | n.b. | n.b. | n.b. |
| Scherfestigkeit in MPa | 0,62 | 0,69 | 0,83 | 0,79 | 0,41 |

| | | | | | |
|---|---|---|---|---|---|
| Dabei wurden folgende Einsatzstoffe verwendet: Polyether 1: Saccharose/Glycerin-basiertes Polypropylenoxid, Fn = 4,5, zahlenmittleres Molekulargewicht = 515 g/mol, Viskosität = 8000 mPa*s bei 25°C Polyether 2: Polypropylenglykol, Fn = 2, zahlenmittleres Molekulargewicht = 1100 g/mol, Viskosität = 150 MPa*s bei 25°C Polyether 3: Ethylenediamin-basiertes Polypropylenoxyd, Fn = 3.9, zahlenmittleres Molekulargewicht = 470 g/mol, Viskosität = 4975 MPa*s bei 25°C Polyether 4: Ethylenediamin-basiertes Polypropylenoxyd, Fn = 4.0, zahlenmittleres Molekulargewicht = 300 g/mol Polyether 4: Sorbitol basiertes Polypropylenoxyd, OH-Zahl = 490 mgKOH/g (Lupranol® 3422 der BASF SE) Polyester 1: Phthalsäureanhydrid/Diethylenglykol-basiert, Fn = 2, zahlenmittleres Molekulargewicht = 360 g/mol Polyester 2: Aromatisches Polyesterpolyol, OH-Zahl = 240 mgKOH/g (Lupraphen® 8007 der BASF SE) Kettenverlängerer 1: Propylenglykol-basiert, Fn = 2, Molekulargewicht = 134 g/mol Aromatisches Diol: Bisphenol-A gestartetes Polyetherpolyol auf Basis von Propylenoxyd, Fn = 2, zahlenmittleres Molekulargewicht 400 g/mol Kettenverlängerer 2: Propylenglykol-basiert, Fn = 2, MW = 190 g/mol Kettenverlängerer 3: Diethylenglycol Katalysator 1: tertiäres aliphatisches Amin Stabilisator 1: silikonhaltiger Stabilisator für Polyurethanschäume Isocyanat 1: Mischungen aus Diphenylmethandiisocyanat und Polymethylphenylpolyisocyanat, Viskosität 200 mPa*s bei 25°C. Isocyanat 2: Ein Prepolymer aus 95,2 Teilen einer Mischungen aus Diphenylmethandiisocyanat und Polymethylphenylpolyisocyanat und 4,8 Teilen eines Polyesterols aus 1 Teil Adipinsäure, 6 Teilen Ölsäure und 2 Teile Pentaerithrit Viskosität 250 mPa*s bei 25°C. | | | | | |

Glasfasermatten: continuous strand mats aus Glasfasern, Unifilo® U809-450 der Firma O-wensCorningVetrotex
Glashohlkugeln: iM30K Glashohlkugel der Firma 3M, mit einer Dichte von 600 g/L und einem mittleren Duchmesser von 15 µm

Herstellung von verstärkten Polyurethanhartschaumstoffen (Variante 2):

**Tabelle 2:**

| | V4 | V5 | 3 | V1 | V2 | V6 | V7 | V8 |
|---|---|---|---|---|---|---|---|---|
| Polyether 1 | 31 | 31 | 31 | 40 | 40 | 39 | | |
| Polyether 2 | | | | 25 | 25 | 24 | | |
| Polyether 4 | | | | | | | 20 | 20 |
| Polyester 1 | 56 | 28 | 28 | 25 | 25 | 24 | | |
| Polyester 2 | | | | | | | 40 | 40 |
| Kettenverlängerer 1 | 10 | 10 | 10 | 10 | 10 | 10 | | |
| Kettenverlängerer 2 | | 28 | 28 | | | | | |
| Kettenverlängerer 3 | | | | | | | 40 | 40 |
| Glycerin | 3 | 3 | 3 | | | 3 | | |
| Wasser | 1,4 | 1,45 | 1,45 | 1,0 | 1,0 | 1,05 | 1,6 | |
| 1,1,1,3,3-Pentafluorpropan | 0 | 0 | 0 | 0 | 0 | 0 | 0 | 10 |
| Katalysator 1 | 0,11 | 0,07 | 0,07 | 0,08 | 0,08 | 0,08 | 0,12 | 0,13 |
| Stabilisator 1 | 2,0 | 2,0 | 2,0 | 1,5 | 1,5 | 1,5 | 2 | 2 |
| Isocyanat 1 | 166 | 183 | 183 | 126 | 126 | 140 | 209 | 187 |
| Lagen Glasfasermatten / Gew.-Anteil Matten bezogen auf alle Komponenten (a) bis (e) | 0 | 0 | 7/ 12 | 0 | 7/ 12 | 0 | 0 | 0 |
| Schaumdichte in g/L | 100 | 100 | 112 | 100 | 112 | 100 | 100 | 100 |
| Druckfestigkeit in MPa | 1,03 | 0,94 | 1,24 | 0,91 | 1,15 | 0,80 | 0,95 | 0,99 |
| Druck-E-Modul in MPa | 27,7 | 26,6 | 48,2 | 24,8 | 43,1 | 22,4 | 26,4 | 25,4 |
| Zugfestigkeit in MPa | 1,28 | 1,22 | 1,39 | n.b. | n.b. | 0,99 | 0,95 | 0,91 |
| Zug-E-Modul in MPa | 41,3 | 36,5 | 99,3 | n.b. | n.b. | 32,0 | 16,7 | 21,2 |
| 3-Punktbiegefestigkeit in Mpa | n.b. | 1,78 | 2,85 | 1,62 | 1,91 | n.b. | n.b. | n.b. |
| 3-Punktbiege-E-Modul in MPa | n.b. | 23,8 | 47,3 | n.b. | n.b. | n.b. | n.b. | n.b. |
| Scherfestigkeit in MPa | 1,02 | 0,94 | 0,90 | 0,83 | 0,79 | 0,87 | 0,81 | 0,82 |

Beide Tabellen geben die Menge der eingesetzten Stoffe in Gewichtsteilen an. Zur Herstellung der Hartschaumstoffe gemäß den Beispielen 1 bis 3 und den Vergleichsbeispielen 1 bis 8 wurden die verwendeten Polyole gemäß Tabelle 1 bzw. Tabelle 2 mit Katalysatoren, Stabilisator und Treibmitteln verrührt, anschließend mit dem Isocyanat vermischt und das Reaktionsgemisch in eine Box mit einer Grundfläche von 225 mm x 225 mm gegossen und dort verschäumt. Die Menge an Wasser wurde so gewählt, dass der unverstärkte Schaum eine freigeschäumte Dichte von 100 g/L hat. Die in den Tabellen angegebenen Schaumdichten beziehen sich auf die Gesamtdichte des Schaumwürfels inklusive Verstärkungsmittel, falls eingesetzt. Zur Herstellung der verstärkten Hartschaumstoffe gemäß Beispiel 3 und Vergleichsbeispiel 2 wurde das Reaktionsgemisch in die gleiche Box gegeben, die nun aber mehrere Lagen Glasfasermatten enthielten. Das Reaktionsgemisch drang in die Matten ein und mit dem in der Box aufsteigenden Schaum quollen die Matten auf und verteilten sich homogen über die gesamte Schaumhöhe.

Zur Herstellung der verstärkten Hartschaumstoffe gemäß Beispiel 1 und 2 sowie Vergleichsbeispiel 3 wurden die Glashohlkugeln mit den verwendeten Polyolen Katalysatoren, Stabilisator und Treibmitteln verrührt und anschließend wie bei den Vergleichsbeispielen 4 bis 8 und Vergleichsbeispiel 1 verfahren. Zur Bestimmung der mechanischen Eigenschaften wurden würfelförmige Prüfkörper aus den Inneren der Schaumstoffe gesägt. Falls die Prüfkörper eine von 100 g/L abweichende Dichte hatten, wurden die Werte der mechanischen Prüfungen auf eine Dichte von 100 g/L umgerechnet.

Wie aus Tabelle 1 und Tabelle 2 zu sehen ist, führen erfindungsgemäße Formulierungen zu Polyurethanhartschäumen mit besonders hohen mechanischen Eigenschaften im Vergleich zu bisher bekannten druck- und scherfesten Hartschäumen. Auch ohne den Einsatz von Verstärkungsmitteln zeigen diese Polyurethanhartschaumstoffe zeigen solche Polyurethanschaumstoffe bereits gute mechanische Eigenschaften, wie aus Vergleichsbeispiel 5 ersichtlich ist. Dies wird insbesondere im Vergleich mit den Vergleichsbeispiele V1 und V2, worin ein Schaum gemäß Beispiel 1 aus WO 2010/066635 einmal mit und einmal ohne Verstärkungsmittel nachgestellt wurde, deutlich. Vergleichsbeispiel V6 zeigt eine abgewandelte Rezeptur nach WO 2010/066635, die zusätzlich das Vernetzungsmittel Glycerin enthält. Die mechanischen Eigenschaften dieses nicht verstärkten Schaums sind gegenüber einem nicht verstärkten Schaum gemäß Vergleichsbeispiel 5 verschlechtert. Dabei ist die Verarbeitung und Auftragung des Polyurethanreaktionsgemisches und der visuelle Eindruck des Schaums gemäß den erfindungsgemäßen Beispielen wie bei den Vergleichsbeispielen V1 und V2 sehr gut. Vergleichsbeispiele V7 und V8 zeigen einen Schaum gemäß Beispiel 1 von EP 2236537, einmal mit einem physikalischen Treibmittel und einmal mit dem Treibmittel Wasser. Dabei sind die mechanischen Eigenschaften eines nicht verstärkten Schaums gegenüber einem nicht verstärkten Schaum aus Vergleichsbeispiel 5, insbesondere Zugfestigkeit, Zug-E-Modul und Scherfestigkeit, deutlich verschlechtert.Auch scheiterte der Versuch analog zu Beispiel 3 und Vergleichsbeispiel V2 einen Verstärkten Polyurethanschaumstoff herzustellen, da die Polyurethanreaktionsmischung aus den Verleichsversuchen V7 und V8 die Glasfasermatten nicht ausreichend benetzten, so dass diese sich im aufsteigenden Schaum nicht gleichmäßig verteilten.

Tabelle 3 zeigt, dass ein verstärkter Polyurethanhartschaumstoff gemäß Beispiel 1 eine deutlich verbesserte Wärmeformbeständigkeit gegenüber PVC-Schaumstoffen und gegenüber Schaumstoffen gemäß Vergleichsbeispiel 1 aufweisen.

**Tabelle 3:**

| Schaum | vernetzter PVC-Schaum | Vergleich 1 | Beispiel 1 |
|---|---|---|---|
| Erweichungstemperatur [°C] | 82°C | 123°C | 144°C |

## Patentansprüche

1. Verstärkter Polyurethanschaumstoff mit einer Dichte von größer 50 bis 300 g/L, einer dichteunabhängigen Druckfestigkeit nach DIN 53421/DIN EN ISO 604 von größer 7,5*10⁻⁴ MPa (L/g)^{1,6}, einem dichteunabhängigen Druck-Elastizitätsmodul von größer 1,7*10⁻² MPa (L/g)^{1,7}, einer dichteunabhängigen Zugfestigkeit nach DIN 53292/DIN EN ISO 527-1 von größer 6,4*10⁻⁴ MPa (L/g)^{1,6}, einem dichteunabhängigen Zug-Elastizitätsmodul von größer 2,4*10⁻² MPa (L/g)^{1,7}, einer dichteunabhängigen Biegefestigkeit nach DIN 53423 von größer 1,25*10⁻³ MPa (L/g)^{1,6}, und einem dichteunabhängigen Biege-Elastizitätsmodul von größer 1,75*10⁻² MPa (L/g)^{1,7}, wobei Druck und Zugwerte sowohl senkrecht als auch parallel zur Schäumrichtung gemessen und räumlich gemittelt angegeben werden, berechnet gemäß (x.y.z)^{1/3}, und die Biegefestigkeit senkrecht zur Schäumrichtung gemessen wird, erhältlich durch Vermischen von
a) Polyisocyanaten mit
b) Verbindungen mit gegenüber Isocyanaten reaktiven Gruppen
c) Treibmittel, enthaltend Wasser, und gegebenenfalls
d) Katalysator und
e) weiteren Additiven,
zu einer Reaktionsmischung und Aushärten der Reaktionsmischung, wobei die zu härtende Reaktionsmischung 1 bis 40 Gew.-% Mikrohohlkugeln enthält und/oder auf ein poröses Verstärkungsmittel (f), das in der Lage ist, im Polyurethanschaumstoff zweidimensionale oder dreidimensionale Netzwerke zu bilden, aufgetragen wird, die Verbindungen mit gegenüber Isocyanaten reaktiven Gruppen (b) Polyetherole (b1), Polyesterole (b2), Kettenverlängerer (b3) und gegebenenfalls Vernetzer (b4) und aromatische Polyetherdiole (b5) enthalten und die Komponente (b) einen Anteil an Polyesterolen (b2), Kettenverlängerern (b3) und aromatischen Polyetherdiolen (b5) von mindestens 50 Gew.-%, bezogen auf das Gesamtgewicht der Komponente (b), enthält und wobei als Kettenverlängerer (b3) Diole eingesetzt werden, die mindestens 30 % sekundäre OH-Gruppen enthalten und der Anteil an Kettenverlängerer (b3), bezogen auf das Gesamtgewicht der Komponente (b), 5 bis 50 Gew.-% beträgt.

2. Verstärkter Polyurethanschaumstoff nach Anspruch 1, **dadurch gekennzeichnet, dass** mindestens 50 Gew.-% der Komponente (b) Verbindungen mit zwei oder drei gegenüber Isocyanat reaktiven Gruppen sind.

3. Verstärkter Polyurethanschaumstoff nach Anspruch 2, **dadurch gekennzeichnet, dass** das Molekulargewicht der Verbindungen mit zwei oder drei gegenüber Isocyanaten reaktiven Gruppen kleiner als 2500 g/mol ist.

4. Verstärkter Polyurethanschaumstoff nach Anspruch 2 oder 3, **dadurch gekennzeichnet, dass** das zahlenmittlere Molekulargewicht der Verbindungen mit zwei oder drei gegenüber Isocyanaten reaktiven Gruppen kleiner als 500 g/mol ist.

5. Verstärkter Polyurethanschaumstoff nach Anspruch 1, **dadurch gekennzeichnet, dass** die Verbindungen mit gegenüber Isocyanaten reaktiven Gruppen (b) mindestens 50 Gew.-% an Verbindungen mit zwei gegenüber Isocyanat reaktiven Gruppen und einem Molekulargewicht kleiner als 2500 g/mol, bezogen auf das Gesamtgewicht der Komponente (b), enthalten.

6. Verstärkter Polyurethanschaumstoff nach einem der Ansprüche 1 bis 5, **dadurch gekennzeichnet, dass** der Anteil an Polyesterolen (b2) mindestens 50 Gew.-%, bezogen auf das Gesamtgewicht der Komponente (b), beträgt.

7. Verstärkter Polyurethanschaumstoff nach einem der Ansprüche 1 bis 6, **dadurch gekennzeichnet, dass** die Polyesterole (b2) hydrophobe Polyesterole enthalten.

8. Verstärkter Polyurethanschaumstoff nach einem der Ansprüche 1 bis 7, dadurch, dass der Anteil an Vernetzer (b4) 1 bis 30 Gew.-%, bezogen auf das Gesamtgewicht der Komponente (b), beträgt.

9. Verstärkter Polyurethanschaumstoff nach einem der Ansprüche 1 bis 5, **dadurch gekennzeichnet, dass** der Anteil an Kettenverlängerer (b3) 8 bis 50 Gew.-%, bezogen auf das Gesamtgewicht der Komponente (b), beträgt und dass der Anteil an Vernetzer (b4) 0 bis 10 Gew.-%, bezogen auf das Gesamtgewicht der Komponente (b), beträgt.

10. Verstärkter Polyurethanschaumstoff nach einem der Ansprüche 1 bis 9, **dadurch gekennzeichnet, dass** die mittlere Funktionalität der Komponente (b) kleiner 3,0 ist.

11. Verstärkter Polyurethanschaumstoff nach einem der Ansprüche 1 bis 10, **dadurch gekennzeichnet, dass** die Polyetherole (b1) eine mittlere Funktionalität von 3,6 bis 8 aufweisen.

12. Verstärkter Polyurethanschaumstoff nach einem der Ansprüche 1 bis 11, **dadurch gekennzeichnet, dass** das Verstärkungsmittel (f) Glasfasermatten sind.

13. Verstärkter Polyurethanschaumstoff nach einem der Ansprüche 1 bis 11, **dadurch gekennzeichnet, dass** das Verstärkungsmittel (f) Mikrohohlkugeln sind.

14. Verfahren zur Herstellung eines verstärkten Polyurethanschaumstoffs, bei dem man
a) Polyisocyanate mit
b) Verbindungen mit gegenüber Isocyanaten reaktiven Gruppen
c) Treibmittel, enthaltend Wasser, und gegebenenfalls
d) Katalysator und
e) weiteren Additiven,
zu einer Reaktionsmischung vermischt und Aushärten der Reaktionsmischung, wobei die zu härtende Reaktionsmischung 1 bis 40 Gew.-% Mikrohohlkugeln enthält und / oder auf ein poröses Verstärkungsmittel (f), das in der Lage ist, im Polyurethanschaumstoff zweidimensionale oder dreidimensionale Netzwerke zu bilden, aufgetragen wird, die Verbindungen mit gegenüber Isocyanaten reaktiven Gruppen (b) Polyetherole (b1), Polyesterole (b2) Kettenverlängerer (b3) und gegebenenfalls Vernetzer (b4) und aromatische Polyetherdiole (b5) enthalten, wobei die Komponente (b) einen Anteil an Polyesterolen (b2), Kettenverlängerern (b3) und aromatischen Polyetherdiolen (b5) von mindestens 50 Gew.-%, bezogen auf das Gesamtgewicht der Komponente (b), enthält und wobei als Kettenverlängerer (b3) Diole eingesetzt werden, die mindestens 30 % sekundäre OH-Gruppen enthalten und der Anteil an Kettenverlängerer (b3), bezogen auf das Gesamtgewicht der Komponente (b), 5 bis 50 Gew.-% beträgt.

15. Verwendung eines verstärkten Polyurethanschaumstoffs nach einem der Ansprüche 1 bis 13, in einem Sandwichbauteil.

16. Verwendung eines verstärkten Polyurethanschaumstoffs nach einem der Ansprüche 1 bis 13 als Verstärkungsschaum in Flügeln und Tragflächen oder als Isolationsmaterial für Flüssigerdgastanks.

17. Verwendung nach Anspruch 16, wobei die Flügel Rotorblätter einer Windkraftanlage sind.

## Claims

1. A reinforced polyurethane foam having a density of above 50 to 300 g/L, a DIN 53421/DIN EN ISO 604 density-independent compressive strength of above 7.5*10⁻⁴ MPa (L/g)^{1.6}, a density-independent compressive modulus of elasticity of above 1.7*10⁻² MPa (L/g)^{1.7}, a DIN 53292/DIN EN ISO 527-1 density-independent tensile strength of above 6.4*10⁻⁴ MPa (L/g)^{1.6}, a density-independent tensile modulus of elasticity of above 2.4*10⁻² MPa (L/g)^{1.7}, a DIN 53423 density-independent flexural strength of above 1.25*10⁻³ MPa (L/g)^{1.6}, and a density-independent flexural modulus of elasticity of above 1.75*10⁻² MPa (L/g)^{1.7}, compressive and tensile values being measured both perpendicularly and parallel to the direction of foaming and being reported/specified as space averages computed as per (x·y·z)^{1/3}, and the flexural strength being measured perpendicularly to the direction of foaming, obtainable by mixing
a) polyisocyanates with
b) compounds having isocyanate-reactive groups,
c) blowing agent comprising water, and optionally
d) catalyst and
e) further additives,
to form a reaction mixture and curing the reaction mixture, wherein the reaction mixture to be cured comprises from 1% to 40% by weight of hollow microspheres and/or is applied to a porous reinforcing agent (f) capable of forming two-dimensional or three-dimensional networks in the polyurethane foam, the compounds having isocyanate-reactive groups (b) comprise polyetherols (b1), polyesterols (b2), chain extenders (b3) and optionally crosslinkers (b4) and aromatic polyether diols (b5), and said component (b) comprises a fraction of polyesterols (b2), chain extenders (b3) and aromatic polyether diols (b5) that is equal to at least 50% by weight, based on the total weight of said component (b), and wherein said chain extenders (b3) are diols which comprise at least 30% of secondary OH groups and the fraction of chain extenders (b3), based on the total weight of said component (b), is from 5 to 50% by weight.

2. The reinforced polyurethane foam according to claim 1, wherein at least 50% by weight of said component (b) comprises compounds having two or three isocyanate-reactive groups.

3. The reinforced polyurethane foam according to claim 2, wherein the molecular weight of the compounds having two or three isocyanate-reactive groups is less than 2500 g/mol.

4. The reinforced polyurethane foam according to claim 2 or 3, wherein the number average molecular weight of the compounds having two or three isocyanate-reactive groups is less than 500 g/mol.

5. The reinforced polyurethane foam according to claim 1, wherein the compounds having isocyanate-reactive groups (b) comprise at least 50% by weight of compounds having two isocyanate-reactive groups and a molecular weight of less than 2500 g/mol, based on the total weight of said component (b).

6. The reinforced polyurethane foam according to any one of claims 1 to 5, wherein the proportion of polyesterols (b2) is at least 50% by weight, based on the total weight of said component (b).

7. The reinforced polyurethane foam according to any one of claims 1 to 6, wherein said polyesterols (b2) comprise hydrophobic polyesterols.

8. The reinforced polyurethane foam according to any one of claims 1 to 7, wherein the proportion of crosslinker (b4) is in the range from 1 to 30% by weight, based on the total weight of said component (b).

9. The reinforced polyurethane foam according to any one of claims 1 to 5, wherein the proportion of chain extender (b3) is in the range from 8% to 50% by weight, based on the total weight of said component (b), and the proportion of crosslinker (b4) is in the range from 0% to 10% by weight, based on the total weight of said component (b).

10. The reinforced polyurethane foam according to any one of claims 1 to 9, wherein the average functionality of said component (b) is below 3.0.

11. The reinforced polyurethane foam according to any one of claims 1 to 10, wherein said polyetherols (b1) have an average functionality in the range from 3.6 to 8.

12. The reinforced polyurethane foam according to any one of claims 1 to 11, wherein said reinforcing agent (f) comprises glass fiber mats.

13. The reinforced polyurethane foam according to any one of claims 1 to 11, wherein said reinforcing agent (f) comprises hollow microspheres.

14. A process for producing a reinforced polyurethane foam comprising mixing
a) polyisocyanates with
b) compounds having isocyanate-reactive groups,
c) blowing agent comprising water, and optionally
d) catalyst and
e) further additives,
to form a reaction mixture and curing the reaction mixture, wherein the reaction mixture to be cured comprises from 1% to 40% by weight of hollow microspheres and/or is applied to a porous reinforcing agent (f) capable of forming two-dimensional or three-dimensional networks in the polyurethane foam, the compounds having isocyanate-reactive groups (b) comprise polyetherols (b1), polyesterols (b2), chain extenders (b3) and optionally crosslinkers (b4) and aromatic polyether diols (b5), and said component (b) comprises a fraction of polyesterols (b2), chain extenders (b3) and aromatic polyether diols (b5) that is equal to at least 50% by weight, based on the total weight of said component (b), and wherein said chain extenders (b3) are diols which comprise at least 30% of secondary OH groups and the fraction of chain extenders (b3), based on the total weight of said component (b), is from 5 to 50% by weight.

15. The use of a reinforced polyurethane foam according to any one of claims 1 to 13 in a structural sandwich component.

16. The use of a reinforced polyurethane foam according to any one of claims 1 to 13 as a reinforcing foam in blades and wings or as insulation material for liquefied natural gas tanks.

17. The use according to claim 16, wherein the blades are rotor blades of a wind power system.

## Revendications

1. Mousse de polyuréthane renforcée ayant une densité de plus de 50 à 300 g/L, une résistance à la compression, indépendante de la densité, selon DIN 53421/DIN EN ISO 604, de plus de 7,5*10⁻⁴ MPa (L/g)^{1,6}, un module d'élasticité sous compression, indépendant de la densité, de plus de 1,7*10⁻² MPA (L/g)^{1,7}, une résistance à la traction, indépendante de la densité, selon DIN 53292/DIN EN ISO 527-1, de plus de 6,4*10⁻⁴ MPa (L/g)^{1,6}, un module d'élasticité en traction, indépendant de la densité, de plus de 2,4*10 ⁻² MPa (L/g)^{1.7}, une résistance à la flexion, indépendante de la densité, selon DIN 53423, de plus de 1,25*10⁻³ MPa (L/g)^{1,6}, et un module d'élasticité en flexion, indépendant de la densité, de plus de 1,75*10⁻² MPa (L/g)^{1,7}, les valeurs de traction et de compression étant mesurées aussi bien perpendiculairement que parallèlement à la direction de la mousse et indiquées en moyenne dans l'espace, calculées selon (x.y.z)^{1/3}, et la résistance à la flexion étant mesurée perpendiculairement à la direction de la mousse, pouvant être obtenue par mélange de
a) polyisocyanates avec
b) des composés comportant des groupes réactifs vis-à-vis d'isocyanates
c) un agent porogène, comprenant de l'eau, et éventuellement
d) un catalyseur et
e) d'autres additifs,
pour l'obtention d'un mélange réactionnel et durcissement du mélange réactionnel, le mélange réactionnel à durcir contenant 1 à 40 % en poids de microsphères creuses et/ou étant appliqué sur un renforçateur poreux (f) qui est apte à former des réseaux bidimensionnels ou tridimensionnels dans la mousse de polyuréthane, les composés (b) à groupes réactifs vis-à-vis d'isocyanates contenant des polyétherols (b1), des polyesterols (b2), des prolongateurs de chaîne (b3) et éventuellement des agents de réticulation (b4) et des polyétherdiols aromatiques (b5) et le composant (b) ayant une teneur en polyesterols (b2), prolongateurs de chaîne (b3) et polyétherdiols aromatiques (b5) d'au moins 50 % en poids, par rapport au poids total du composant (b) et comme prolongateurs de chaîne (b3) étant utilisés des diols qui contiennent au moins 30 % de groupes OH secondaires et la teneur en prolongateurs de chaîne (b3), par rapport au poids total du composant (b), valant de 5 à 50 % en poids.

2. Mousse de polyuréthane renforcée selon la revendication 1, **caractérisée en ce qu'**au moins 50 % en poids du composant (b) consistent en des composés comportant deux ou trois groupes réactifs vis-à-vis d'isocyanates.

3. Mousse de polyuréthane renforcée selon la revendication 2, **caractérisée en ce que** la masse moléculaire des composés comportant deux ou trois groupes réactifs vis-à-vis d'isocyanates est inférieure à 2 500 g/mole.

4. Mousse de polyuréthane renforcée selon la revendication 2 ou 3, **caractérisée en ce que** la masse moléculaire moyenne en nombre des composés comportant deux ou trois groupes réactifs vis-à-vis d'isocyanates est inférieure à 500 g/mole.

5. Mousse de polyuréthane renforcée selon la revendication 1, **caractérisée en ce que** les composés (b) à groupes réactifs vis-à-vis d'isocyanates comprennent au moins 50 % en poids de composés comportant deux groupes réactifs vis-à-vis d'isocyanates et ayant une masse moléculaire inférieure à 2 500 g/mole, par rapport au poids total du composant (b).

6. Mousse de polyuréthane renforcée selon l'une quelconque des revendications 1 à 5, **caractérisée en ce que** la teneur en polyesterols (b2) est d'au moins 50 % en poids, par rapport au poids total du composant (b).

7. Mousse de polyuréthane renforcée selon l'une quelconque des revendications 1 à 6, **caractérisée en ce que** les polyesterols (b2) comprennent des polyesterols hydrophobes.

8. Mousse de polyuréthane renforcée selon l'une quelconque des revendications 1 à 7, **caractérisée en ce que** la teneur en agent de réticulation (b4) vaut de 1 à 30 % en poids, par rapport au poids total du composant (b).

9. Mousse de polyuréthane renforcée selon l'une quelconque des revendications 1 à 5, **caractérisée en ce que** la teneur en prolongateur de chaîne (b3) vaut de 8 à 50 % en poids, par rapport au poids total du composant (b), et **en ce que** la teneur en agent de réticulation (b4) vaut de 0 à 10 % en poids, par rapport au poids total du composant (b).

10. Mousse de polyuréthane renforcée selon l'une quelconque des revendications 1 à 9, **caractérisée en ce que** la fonctionnalité moyenne du composant (b) est inférieure à 3,0.

11. Mousse de polyuréthane renforcée selon l'une quelconque des revendications 1 à 10, **caractérisée en ce que** les polyétherols (b1) présentent une fonctionnalité moyenne de 3,6 à 8.

12. Mousse de polyuréthane renforcée selon l'une quelconque des revendications 1 à 11, **caractérisée en ce que** des mats de fibres de verre constituent le renforçateur (f).

13. Mousse de polyuréthane renforcée selon l'une quelconque des revendications 1 à 11, **caractérisée en ce que** des microsphères creuses constituent le renforçateur (f).

14. Procédé pour la production d'une mousse de polyuréthane, dans lequel on mélange
a) des polyisocyanates avec
b) des composés comportant des groupes réactifs vis-à-vis d'isocyanates
c) un agent porogène, comprenant de l'eau, et éventuellement
d) un catalyseur et
e) d'autres additifs,
pour obtenir un mélange réactionnel et on fait durcir le mélange réactionnel, le mélange réactionnel à durcir contenant 1 à 40 % en poids de microsphères creuses et/ou étant appliqué sur un renforçateur poreux (f) qui est apte à former des réseaux bidimensionnels ou tridimensionnels dans la mousse de polyuréthane, les composés (b) à groupes réactifs vis-à-vis d'isocyanates contenant des polyétherols (b1), des polyesterols (b2), des prolongateurs de chaîne (b3) et éventuellement des agents de réticulation (b4) et des polyétherdiols aromatiques (b5) et le composant (b) ayant une teneur en polyesterols (b2), prolongateurs de chaîne (b3) et polyétherdiols aromatiques (b5) d'au moins 50 % en poids, par rapport au poids total du composant (b) et comme prolongateurs de chaîne (b3) étant utilisés des diols qui contiennent au moins 30 % de groupes OH secondaires et la teneur en prolongateurs de chaîne (b3), par rapport au poids total du composant (b), valant de 5 à 50 % en poids.

15. Utilisation d'une mousse de polyuréthane renforcée selon l'une quelconque des revendications 1 à 13, dans un élément de construction en sandwich.

16. Utilisation d'une mousse de polyuréthane renforcée selon l'une quelconque des revendications 1 à 13, en tant que mousse de renforcement dans des ailes et des surfaces portantes ou en tant que matériau isolant pour des réservoirs de gaz naturel liquide.

17. Utilisation selon la revendication 16, les ailes étant des pales de rotor d'une éolienne.
